# EUROPÄISCHE PATENTSCHRIFT

(11) **EP 0 867 014 B1**
(45) Veröffentlichungstag und Bekanntmachung des Hinweises auf die Patenterteilung: **26.03.2003**
(21) Anmeldenummer: 96946372.8
(22) Anmeldetag: 07.12.1996
(51) Int. Cl.: G06K 19/07

(54) **CHIPKARTE**
CHIP CARD
CARTE A PUCE

(30) Priorität: 11.12.1995 DE 19546189; 18.03.1996 DE 19610505; 17.04.1996 DE 19615142; 30.05.1996 DE 19621597
(43) Veröffentlichungstag der Anmeldung: 30.09.1998
(73) Patentinhaber: Nolte, Klaus, 91341 Röttenbach (DE); Peppler, Heinz Karl, 97302 Kitzingen (DE)
(72) Erfinder: Nolte, Klaus, 91341 Röttenbach (DE); Peppler, Heinz Karl, 97302 Kitzingen (DE)
(74) Vertreter: Castell, Klaus, Dr.
(86) Internationale Anmeldenummer: EP9605487
(87) Internationale Veröffentlichungsnummer: WO97022084

(56) Entgegenhaltungen:
- EP-A- 0 534 559
- DE-A- 4 203 748
- DE-U- 9 310 271
- US-A- 4 800 255
- PATENT ABSTRACTS OF JAPAN vol. 16, no. 504 (P-1439), 19.Oktober 1992 & JP 04 182893 A (NEC ENG LTD), 30.Juni 1992,

## Beschreibung

Die Erfindung richtet sich auf eine Chipkarte umfassend einen Speicherchip und/oder Prozessorchip.

Derartige Chipkarten setzen sich im bargeldlosen Zahlungsverkehr zunehmend durch, weil sie über die reine Erkennung und Speicherung, wie beispielsweise mit Hilfe eines Magnetstreifens, hinaus eine interaktive Kommunikation mit einem externen Lese- bzw. Schreibgerät ermöglichen. Dementsprechend können aus der Chipkarte Informationen ausgelesen, in die Chipkarte neue Informationen eingeschrieben und in Wechselwirkung mit der Chipkarte Informationen verarbeitet werden, beispielsweise zur Generierung einer Kennung nach Art einer Unterschrift oder eines eine Zugangsberechtigung ermöglichenden Schlüssels.

Die Kommunikation zwischen Karte und Lese- bzw. Schreibgerät kann entweder dadurch erfolgen, daß die Karte ein Kontaktfeld aufweist und mit korrespondierenden Kontakten des Lese-Schreibgeräts in Berührung gebracht wird, oder aber berührungslos, beispielsweise durch induktive oder kapazitive Informationsübertragung.

Ein wesentlicher Nachteil bekannter Chipkarten, der auch deren Einsatzmöglichkeit wesentlich beschränkt, besteht darin, daß der Informationsin-halt der Karten nur in Verbindung mit einem Lese-Schreibgerät ausgelesen werden kann. Mit anderen Worten ist es in der Regelung erforderlich, daß der Karteninhaber seine Karte in ein solches Gerät einführt oder mit diesem berührungslos kommuniziert, um dann am Gerät auf der Karte gespeicherte Informationen auslesen zu können.

Hierzu offenbaren beispielsweise die DE 42 03 748 A1 und die DE 93 10 271 U1 Chipkarten mit einem eigenen Display, wobei beispielweise die EP 0 336 104 A2 Ansteuerungsmöglichkeiten für einen derartigen Display darstellt. Aus der EP 0 534 559 A1 ist es darüber hinaus bekannt, derartige Chipkarten kontaktlos auszulesen, während die US 5,180,901 A eine Anordnung offenbart, mit welcher über einen Fingerabdruck eine Karte autorisiert werden kann. Bei all diesen Anordnungen wird jedoch für die Anzeige verhältnismäßig viel Energie benötigt.

Davon ausgehend liegt der Erfindung die Aufgabe zu Grunde, eine Chipkarte der in Betracht stehenden Art so auszugestalten, dass deren Einsatzmöglichkeiten dadurch wesentlich erweitert werden, dass ein Auslesen des Karteninhalts bzw. des aktuellen Betriebsmodus der Karte jederzeit problemlos und ohne Zuhilfenahme externer Leseeinrichtungen möglich ist.

Diese Aufgabe wird erfindungsgemäß gelöst durch eine Chipkarte mit den Merkmalen des Anspruchs 1.

Dadurch das der oder die Speicher- und/oder Prozessorchips nicht aktiviert werden müssen, wenn der Spiegelspeicher ausgelesen wird, wird einerseits für ein Auslesen wenig Energie benötigt. Andererseits kann durch die Trennung zwischen Spiegelspeicher und Speicher- und/oder Prozessorchip vorteilhaft gewährleistet werden, dass die Speicher- und/oder Prozessorchips während des Auslesevorgangs des Spiegelspeichers nicht manipuliert werden.

Die Kombination einer LCD-Anzeige für den Speicherinhalt mit einer Solarzelle ermöglicht es, batterieunabhängig jederzeit mit Hilfe des für das Betrachten der Karte ohnehin erforderlichen Sonnenlichts oder künstlichen Lichts den Speicherinhalt auszulesen. Der Spiegelspeicher wird durch einen sogenannten Balkonchip bzw. Easik-Speicher mit Ablauflogik gebildet.

Die Dateninformationen können erfindungsgemäß hierdurch aus dem Spiegelspeicher ausgelesen werden, ohne daß der oder die Speicher- und/oder Prozessorchips aktiviert werden müßten. Hierdurch wird erreicht, daß zum Auslesen wenig Energie benötigt wird, so daß die aktuell durch die Solarzelle zur Verfügung gestellte Energie ausreichend ist.

Die erfindungsgemäß vorgesehene Anzeigemöglichkeit gestattet es beispielsweise, die Chipkarte als Fahrausweis oder Eintrittskarte zu gestalten, wobei es einer Kontrollperson jederzeit möglich ist zu überprüfen, ob vorher der entsprechende Abbuchungsvorgang vorgenommen wurde. Sofern die Karte im allgemeinen Zahlungsverkehr verwendet wird, kann in der erfindungsgemäßen Weise beispielsweise ein Restguthaben ausgelesen werden. Grundsätzlich ist es also jederzeit möglich, den Status der Karte beliebige Zeit nach dem letzten Kommunikationsvorgang mit einem Schreib-Lesegerät ohne ein solches anschließend zu überprüfen, so daß insbesondere auch Dritte, welche an diesem Kommunikationsvorgang nicht beteiligt waren, hierüber Informationen erlangen können.

In weiterer Ausgestaltung der Erfindung ist eine mit einem Speicherchip und/oder Prozessorchip verbundene Schalteinrichtung, insbesondere Widerstandsschalteinrichtung, zum Umschalten der Chipkarten-Betriebsart und/oder der Speicherinhalte zur Ermöglichung einer rollierend umschaltbaren Anzeige vorgesehen.

Die Schalteinrichtung ist vorzugsweise als Widerstandsschalter derart ausgebildet, daß beispielsweise durch einen Daumendruck auf einen bestimmten Kartenbereich dieser Schalter nach Art eines Druckschalters betätigt werden kann, wobei die so erzeugten Schaltimpulse elektronisch zur Erzielung einer Weiterschaltung verwendet werden. Hierdurch ist es möglich, nacheinander unterschiedliche Speicherbereiche zu aktivieren und deren Inhalt abzurufen bzw. unterschiedliche Aktivitäten eines Prozessorchips ablaufen zu lassen. Dementsprechend kann die Karte multifunktional eingesetzt und bei Bedarf jeweils entsprechend umgeschaltet werden. In Verbindung mit der jederzeit möglichen optischen Auslesung des Speicherinhalts kann der Benutzer die Umschaltung steuern, d.h. er erkennt bei Betätigung der Umschaltung sofort anhand der Anzeige in welcher Betriebsart die Karte sich gerade befindet bzw. welche Speicherbereiche aktiviert sind. Insbesondere auch bei dieser rollierenden bzw. umschaltenden Betriebsart erweist es sich als vorteilhaft, einen Spiegelspeicher z.B. in Form eines Easik-Speichers zu verwenden, da dessen niedrige erforderliche Stromstärke es ermöglicht, für die Anzeige mit einem niedrigen Energieaufwand auszukommen.

Zur Ermöglichung eines kontaktlosen Informationsaustausches mit einem Lese-Schreibgerät kann auf der Karte eine Antennenspule angeordnet sein, welche mit dem Speicherchip und/oder Prozessorchip in Verbindung steht. Die Spule kann beispielsweise auf der Karte als gedruckte Schaltung ausgebildet sein oder um die Karte verlaufen, so daß in jedem Fall sichergestellt ist, daß die flache Kartengeometrie im wesentlichen unverändert bleibt.

Will man von der jeweiligen Beleuchtungsstärke beim Auslesen oder im Betrieb unabhängig sein, kann der Solarzelle ein Speichermedium, z.B. in Form einer Batterie oder eines Kondensators, zugeordnet werden, so daß die Energie im unbenutzten Status über längere Zeit gesammelt und gespeichert und dann bei der Benutzung konzentriert abgerufen werden kann.

Eine weitere vorteilhafte Ausgestaltung sieht vor, daß die Chipkarte ein Identifikationsfeld aufweist, welches das Einlesen personensignifikanter Daten, wie beispielsweise eines Fingerabdrucks, zum Vergleich mit im Speicherchip vorher abgespeicherten korrespondierenden Erkennungsdaten ermöglicht. Hierdurch kann gewährleistet werden, daß die Karte tatsächlich nur durch den autorisierten Benutzer verwendet werden kann, während bei Verlust der Karte ein nichtautorisierter Finder nicht in der Lage ist, die Karte zu aktivieren.

Günstigerweise ist vorgesehen, daß wenigstens ein kontaktloser Speicherchip oder Prozessorchip und wenigstens ein kontaktbehafteter Speicherchip oder Prozessorchip auf der Karte angeordnet sind, welche untereinander derart verbunden sind, daß sie jeweils wenigstens teilweise den gleichen Informationsinhalt aufweisen. Dementsprechend ist es möglich, wahlweise kontaktlos oder kontaktbehaftet mit einem Lese-Schreibgerät zu kommunizieren.

Die Erfindung betrifft auch ein Verfahren zur Herstellung einer derartigen Chipkarte, wobei vorgesehen ist, daß die einzelnen Komponenten zunächst auf einer Trägerfolie, vorzugsweise aus ABS, angeordnet und dann unter Aussparung eventueller Kontaktflächen mit einer Kunststoffummantelung versehen werden.

Die Ummantelung wird vorzugsweise durch Umspritzen oder durch Aufbringen von Umhüllungsfolien realisiert.

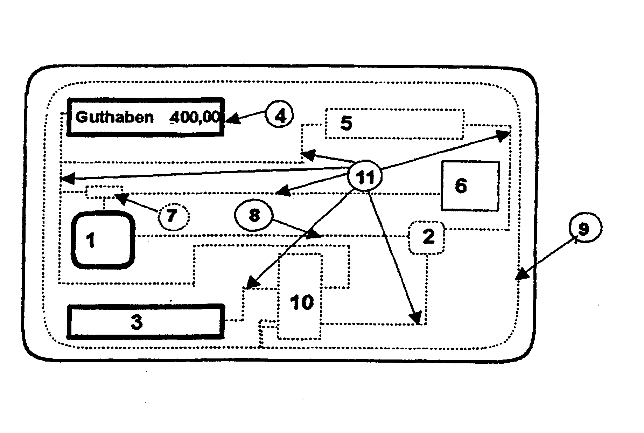

Nachfolgend wird die Erfindung anhand eines bevorzugten Ausführungsbeispieles in Verbindung mit der Zeichnung näher erläutert. Diese zeigt eine schematische Aufsicht auf eine erfindungsgemäße Chipkarte.

Auf der in der Zeichnung dargestellten Chipkarte sind ein kontaktbehafteter Chip 1 mit einem entsprechenden Kontaktfeld, ein nicht kontaktbehafteter Chip 2, sowie eine Solarzelle 3 und eine optische Anzeige in Form einer LCD-Anzeige 4 angeordnet.

Eine Batterie 5 dient zur Pufferung bzw. Zwischenspeicherung der einfallenden Lichtenergie, die von der Solarzelle 3 umgewandelt wird.

Ein Druckkontaktschalter 6 dient als Umschalter zwischen verschiedenen Betriebsarten oder Speichern.

Dem kontaktbehafteten Chip 1 ist ein Spiegelspeicher 7 bzw. ein sogenannter Balkonchip zugeordnet, der ein Auslesen der spiegelbildlich in dem Chip 7 vorhandenen Speicherinformation aus dem Chip 1 ermöglicht, ohne den Prozessorchip 1 selbst aktivieren zu müssen, d.h. das Auslesen kann unter Verwendung der von der Solarzelle 3 gelieferten Energie vorgenommen werden.

Der kontaktbehaftete Chip 1 und der nichtkontaktbehaftete Chip 2 sind mittels einer Datenaustauschleitung 8 verbunden, so daß es möglich ist, daß beide Chips wenigstens teilweise den gleichen Informationsinhalt aufweisen.

Dem kontaktlosen Chip 2 ist eine Spule 9 zum Senden und Empfangen bei der Kommunikation mit einem Lese-Schreibgerät zugeordnet.

Ein Kondensator-Steuerungsmodul 10 ermöglicht es, in dem Kondensator elektrische Energie zu speichern und hierdurch einen auftretenden Energie-Spitzenbedarf zu decken.

Die elektrische Verbindung der einzelnen Komponenten ist in ihrer Gesamtheit mit 11 gekennzeichnet.

Über das vorstehend beschriebene Ausführungsbeispiel hinaus sind zahlreiche Modifikationen denkbar:

Beispielsweise kann die Solarzelle auch Energie für Rechenoperationen des oder der Chips liefern.

Das Kondensator-Steuerungsmodul kann neben der erwähnten Energiespeicherung zur Deckung des Spitzenbedarfs auch überschüssige Energie im kontaktlosen Bereich bzw. überschüssige Energie von einem Lese-Schreibgerät oder auch nicht verbrauchte Energie speichern.

Bei einer weiteren Ausgestaltung ist auch eine optische Datenübertragung zwischen Chip und Anzeige, z.B. in Form eines Vakuumfluoreszenzdisplays denkbar. In der optischen Anzeige kann als Pufferspeicher eine Kristallspeicherung vorgesehen sein.

Weiterhin kann die optische Anzeige statisch ausgebildet sein, d.h. die angezeigte Speicherinformation bleibt dort über längere Zeiträume ohne weitere Energiezuführung sichtbar.

## Patentansprüche

1. Chipkarte umfassend einen Speicherinformationen enthaltenen Speicherchip und/oder Prozessorchip sowie eine Anzeigemöglichkeit (4) mit einer Spannungsversorgung,
***gekennzeichnet durch*** einen Spiegelspeicher (7) auf den bei jedem Arbeitsprozeß des Speicherchips und/oder Prozessorchips (1, 2) in Verbindung mit einem externen Lese- oder Schreibgerät die internen neuen Speicherinformationen übertragen werden, so daß der Spiegelspeicher (7) Speicherinformationen entsprechend den Speicherinhalten in dem Speicherchip und/oder Prozessorchip (1, 2) aufweist, wobei der Spiegelspeicher (7) mit der Anzeigemöglichkeit (4) derart verbunden ist, daß die darin gespeicherten Informationen mittels der Anzeigemöglichkeit (4) anzeigbar sind, ohne daß der Speicherchip und/oder der Prozessorchip aktiviert werden muß.

2. Chipkarte nach Anspruch 1, **gekennzeichnet durch** eine mit einem Speicherchip und/oder Prozessorchip (1, 2) verbundene Schalteinrichtung, insbesondere Widerstandsschalteinrichtung, zum Umschalten der Chipkarten-Betriebsart und/oder der Speicherinhalte zur Ermöglichung einer rollierend umschaltbaren Anzeige.

3. Chipkarte nach Anspruch 1 oder 2, **dadurch gekennzeichnet, daß** auf der Karte eine Antennenspule (9), vorzugsweise realisiert durch Aufdrucken, angeordnet ist.

4. Chipkarte nach Anspruch 1 oder 2, **dadurch gekennzeichnet , daß** der Solarzelle (3) ein Speichermedium, vorzugsweise in Form einer Batterie (5) und/oder eines Kondensators, zugeordnet ist.

5. Chipkarte nach Anspruch 1 oder 2, **dadurch gekennzeichnet, daß** sie ein Identifikationsfeld aufweist, welches das Einlesen personensignifikanter Daten, wie beispielsweise eines Fingerabdruckes, zum Vergleich mit im Speicherchip vorher abgespeicherten korrespondierenden Erkennungsdaten ermöglicht.

6. Chipkarte nach Anspruch 1 oder 2, **dadurch gekennzeichnet, daß** wenigstens ein kontakloser Speicherchip oder Prozessorchip (1) und wenigstens ein kontaktbehafteter Speicherchip oder Prozessorchip (2) vorgesehen sind, welche untereinander derart verbunden sind, daß sie jeweils wenigstens teilweise den gleichen Informationsinhalt aufweisen.

## Claims

1. A chip card comprising a memory chip and/or processor chip well as an LCD (4) with a voltage supply,
**characterised in that** a mirror memory (7) onto which the internal new memory information is transferred with every operation of the memory chip and/or processor chip (1, 2) in connection with an external reading or writing device so that the mirror memory (7) holds memory information according to the memory contents in the memory chip and/or processor chip (1, 2) and an LCD (4) or such like with a power supply from at least one solar cell (3) or such like, wherein the mirror memory (7) is connected with the LCD (4) in such a way that the information stored therein can be displayed with the LCD (4), without the memory chip and/or the processor chip having to be activated.

2. The chip card as claimed in Claim 1, **characterised by** a switching device connected to a memory chip and/or processor chip (1, 2), especially a resistance switching device for changing over the chip card operating mode and/or the memory contents to permit a scroll-type changeover display.

3. The chip card as claimed in Claim 1 or 2, **characterised in that** an antenna coil (9) preferably accomplished through printing on is arranged on the card.

4. The chip card as claimed in Claim 1 or 2, **characterised in that** a storage medium, preferably in the form of a battery (5) and/or a capacitor, is assigned to the solar cell (3).

5. The chip card as claimed in Claim 1 or 2, **characterised in that** it has an identification field which permits the reading in of significant personal data such as a fingerprint for comparison with corresponding identification data previously stored in the memory chip.

6. The chip card as claimed in Claim 1 or 2, **characterised in that** at least one contactless memory chip or processor chip (1) and at least one contact-type memory chip or processor chip (2) are provided which are interconnected in such a way that they hold at least partly the same information contents.

## Revendications

1. Carte à puce comprenant une puce de mémoire contenant des informations mémoire et ou une puce à microprocesseur ainsi qu'une possibilité d'affichage (4) avec une alimentation de tension, **caractérisée par** une mémoire symétrique (7) sur laquelle sont transférées à chaque procédure de travail de la puce mémoire et de la puce à microprocesseur (1, 2) les nouvelles informations internes de mémoire en association avec un appareil externe d'écriture et ou de lecture de sorte que la mémoire symétrique(7) présente des informations de mémoire correspondant aux contenus de mémoire dans la puce à mémoire et/ou dans la puce à microprocesseur (1, 2), la mémoire symétrique (7) étant reliée à la possibilité d'affichage (4) de sorte que les informations qui y sont stockées puissent être affichées au moyen de la possibilité d'affichage (4) sans avoir besoin d'activer la puce à mémoire et/ou la puce à microprocesseur.

2. Carte à puce selon la revendication 1, **caractérisée par** un dispositif de commutation relié à une puce à mémoire et/ou une puce à microprocesseur (1, 2), en particulier un dispositif de commutation de résistance pour la commutation entre les modes de fonctionnement de cartes à puce et/ou des contenus de mémoire pour permettre un affichage commutable par défilement.

3. Carte à puce selon la revendication 1 ou 2, **caractérisée en ce qu'**une bobine d'accord (9) est disposée sur la carte et est de préférence réalisée par pression.

4. Carte à puce selon la revendication 1 ou 2, **caractérisée en ce que** la cellule solaire (3) est associée à un support de mémoire, de préférence sous forme d'une pile (5) et/ou d'un condensateur.

5. Carte à puce selon la revendication 1 ou 2, **caractérisée en ce qu'**elle présente un champ d'identification qui permet la lecture de données relatives à la personne, telles qu'une empreinte digitale pour les comparer à des données d'authentification correspondantes stockées précédemment dans la puce mémoire.

6. Carte à puce selon la revendication 1 ou 2, **caractérisée en ce que** qu'au moins une puce à mémoire ou une puce à microprocesseur (1) sans contact et au moins une puce à mémoire ou une puce à microprocesseur (2) à contact sont prévues et sont reliées entre elles de manière à présenter respectivement au moins partiellement le même contenu d'informations.
